# EUROPEAN PATENT SPECIFICATION

(11) **EP 3 621 857 B1**
(45) Date of publication and mention of the grant of the patent: **15.12.2021**
(21) Application number: 18726696.0
(22) Date of filing: 08.05.2018
(51) Int. Cl.: B60S 3/00, B60S 3/04

(54) **A VEHICLE RINSING ASSEMBLY FOR EMITTING AIR AND WATER**
FAHRZEUGSPÜLANORDNUNG ZUM ABGEBEN VON LUFT UND WASSER
ENSEMBLE DE RINÇAGE DE VÉHICULE PERMETTANT D'ÉMETTRE DE L'AIR ET DE L'EAU

(30) Priority: 08.05.2017 US 201715589499
(43) Date of publication of application: 18.03.2020
(73) Proprietor: BELANGER, INC., Hamilton, OH 45011 (US)
(72) Inventor: BELANGER, Michael, Northville, MI 48167 (US); TURNER, Barry, S., Novi, MI 48375 (US); KOTRYCH, Jerry, A., Livonia, MI 48150 (US)
(74) Representative: López Camba, Emilia
(86) International application number: PCT/US2018/031547
(87) International publication number: WO 2018/208747

(56) References cited:
- EP-A1- 0 700 814
- US-A1- 2007 028 482
- US-A1- 2015 274 134

## Description

### CROSS-REFERENCE TO RELATED APPLICATIONS

The present application claims priority to U.S. Patent Serial No. 15/589,499, filed on May 8, 2017.

### TECHNICAL FIELD

The present disclosure relates generally to a vehicle treatment apparatus for use in treating a vehicle exterior as part of a vehicle wash process. More specifically, the present disclosure relates to a vehicle treatment apparatus for use in rinsing a vehicle exterior as part of a vehicle wash process that employs a combination of air and water and which provides increased rinsing capabilities for all vehicle surfaces.

### BACKGROUND OF THE DISCLOSURE

Vehicle wash systems are well-known. These systems generally fall into one of the following categories: (1) a self-service wash, where the customer washes their own vehicle and uses equipment provided by the business to perform the wash process, (2) a full service wash, where attendants manually perform or assist in performing the vehicle wash/cleaning process, (3) an automatic wash, where the vehicle travels on a conveyor and engages a number of wash components designed to clean the vehicle exterior, or (4) an in-bay wash where the vehicle is stationary and the wash components move to accomplish the wash process. In the United States, these various businesses on average generate billions of dollars in revenue for servicing over 100,000 vehicles per year, making vehicle washes very lucrative businesses as well as a staple in routine vehicle maintenance.

Typically, vehicle washes and, in particular, automatic washes are furnished with various types of equipment to wash, rinse and dry a vehicle. This equipment commonly includes a conveyor for transporting a vehicle through the equipment, pre-wash equipment for applying pre-soak cleaning solution to the vehicle, friction wash equipment such as various types and sizes of brushes designed to engage and scrub the vehicle as the vehicle travels along the conveyor through the car wash, high pressure equipment to remove or loosen any bugs or dirt from the vehicle, rinse, foam, and wax equipment, and fixed drying equipment such as elephant ear blowers for drying the vehicle at the end of the conveyor. These various components have limitations in treating all surfaces of a vehicle.

In the state of the art is known document US 2015/274134 which discloses a vehicle wash component for a vehicle wash system, including a frame portion and an air delivery portion disposed on the air delivery portion. The air delivery portion is configured to emit high velocity air onto a vehicle exterior

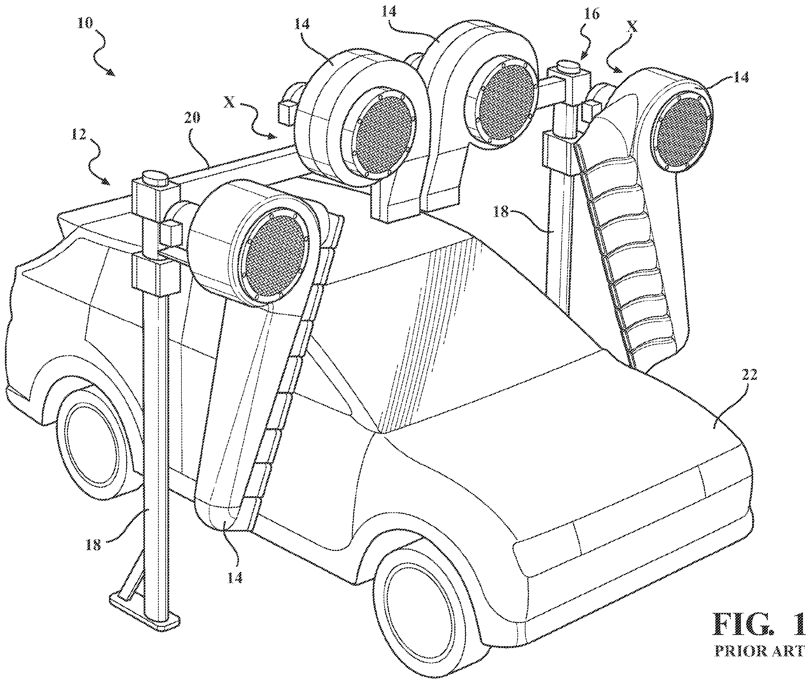

For example, a representation of current drying equipment **10** is shown in FIG. 1. As is known, this fixed drying equipment **10** may be found in a vehicle treatment area **12** adjacent an exit end of a wash facility to remove excess water from a vehicle exterior. As is known, conventional drying equipment can include a plurality of elephant ear blowers or dryer units **14** mounted to a frame **16** at a fixed angle **X** in order to direct air at a high velocity onto the vehicle exterior. The frame **16** may include a pair of upstanding legs **18** and an overhead portion **20**. The dryer units **14** may be secured to each of the upstanding legs **18** as well as the overhead portion **20** and are positioned to direct air towards a vehicle **22** in a vehicle treatment area. In this configuration, the dryer units **14** are fixedly secured such that they remain fully stationary while drying the vehicle **22**. In other words, the dryer units **14** are in a single locked position and do not adjust as the vehicle **22** travels towards, underneath, and away from the frame **16**.

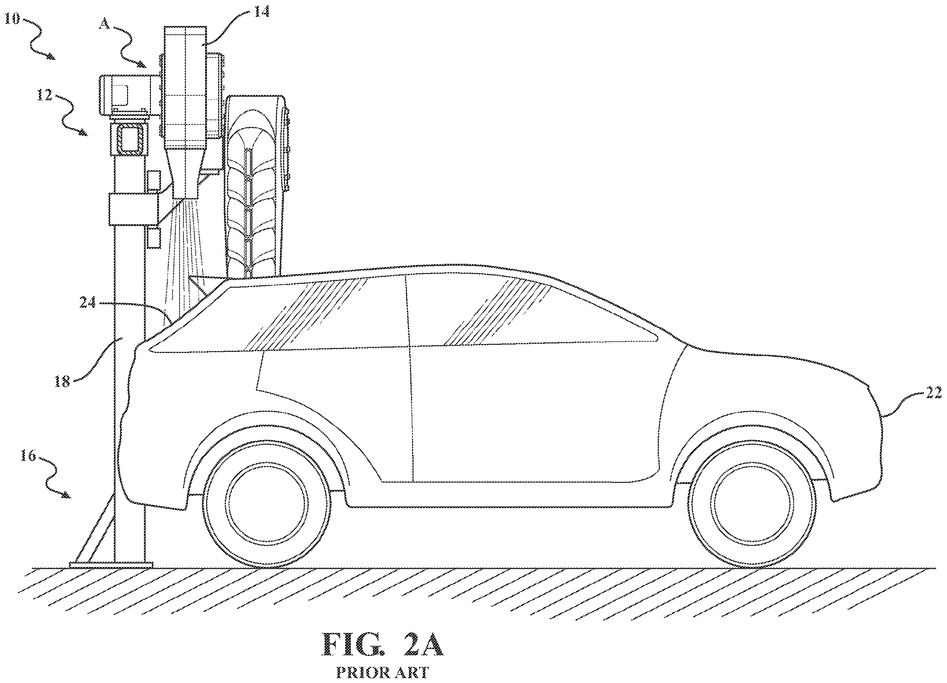

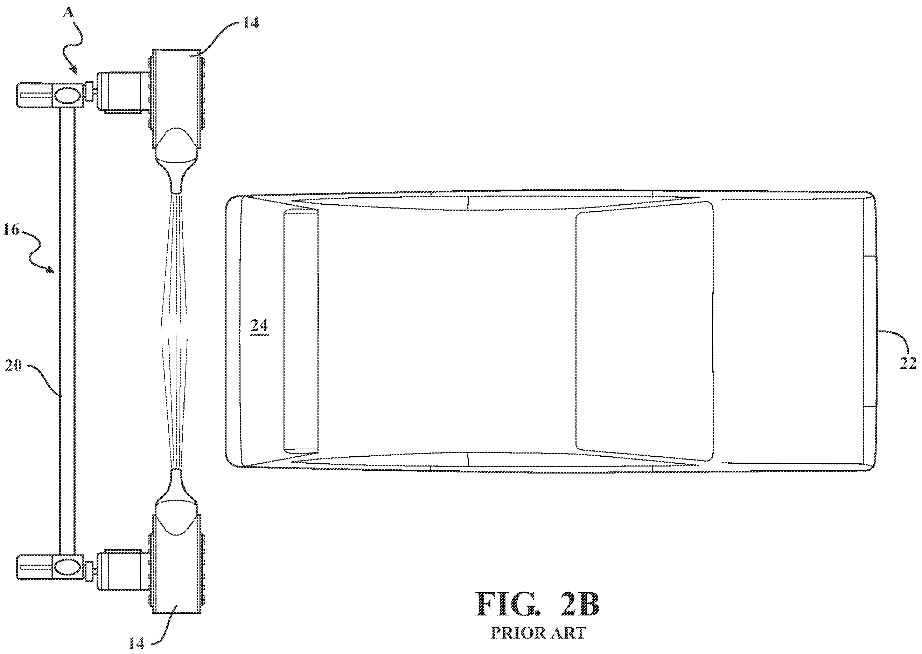

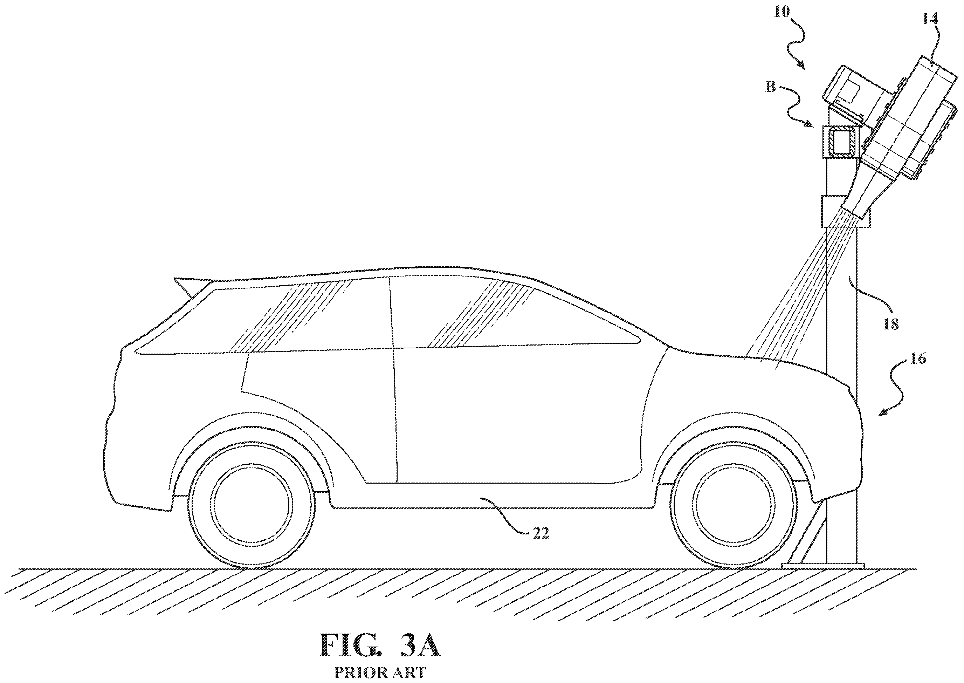

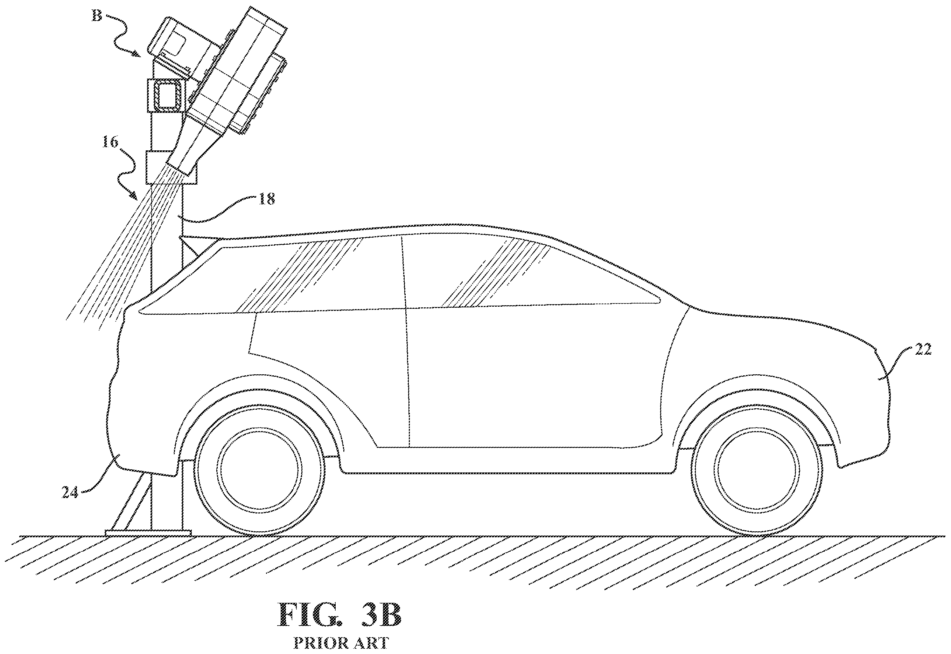

Other problems and limits are known to exist with current drying equipment in vehicle wash systems. Specifically, existing drying equipment is generally the most inefficient of all vehicle wash equipment as current drying equipment cannot fully remove all water from a vehicle exterior, in part, since it is unable to adequately dry all surfaces of the vehicle. This is exemplarily shown in FIGS. 2A and 2B, which are side and top views of exemplary current dryer equipment, where the individual dryer units **14** are oriented at a generally perpendicular angle A relative to exterior of the vehicle **22** in the vehicle treatment area **12**. Similarly, FIGS. 3A and 3B are side and top views of other exemplary current dryer equipment, where the individual dryer units **14** are oriented at a rearward facing angle **B** relative to the vehicle **22** in the vehicle treatment area **12**. In either example, portions **24** of the vehicle **22**, such as the rear vehicle surfaces, may not be sufficiently dry after exiting the car wash leaving water marks or streaks on the vehicle. As such, many current vehicle wash systems utilize an attendant at the exit end of the wash to further dry the vehicle which negatively affects the efficiency of the car wash and increases the cost for operating the same.

Additionally, as is also known, due to the inability of existing dryer systems to remove a sufficient amount of water from a vehicle exterior, there are constant efforts aimed at improving dryer performance. Thus, there is a need for an improved vehicle dryer for a vehicle wash or for other equipment to assist with dryer performance.

### SUMMARY OF THE DISCLOSURE

It is therefore an aspect of the present disclosure to provide an improved vehicle rinsing assembly for a vehicle wash system and an improved method for rinsing a vehicle traveling through a vehicle wash, which utilizes an improved vehicle rinse assembly.

It is another aspect of the present disclosure to provide an improved vehicle rinse assembly for a vehicle wash system that more fully removes excess water from a vehicle exterior.

It is a related aspect of the present disclosure to provide an improved vehicle rinse assembly that is configured to more effectively direct air and water onto all exterior vehicle surfaces in order to provide improved rinse performance.

It is still another aspect of the present disclosure to provide a vehicle rinse assembly that decreases the cost of operation of associated vehicle dryers.

It is yet another aspect of the present disclosure to provide a vehicle rinse assembly that allows for a decrease in the length of the drip space zone required as part of the vehicle wash.

It is still yet a further aspect of the present disclosure to provide a vehicle rinse assembly that allows for incorporation of additional vehicle wash components into a vehicle wash system to increase the quality of the vehicle wash process without requiring additional conveyor length.

It is yet a further aspect of the present disclosure to provide a vehicle rinse assembly that decreases the amount of water required as part of the vehicle wash process.

It is yet another aspect of the present disclosure to provide a vehicle rinse assembly that allows for faster operation of a vehicle wash system to clean more vehicles in a shorter period of time, without compromising the quality of the washing/drying functions.

In accordance with the above and the other aspect of the present disclosure, a vehicle rinse assembly system is provided for treating an exterior of a vehicle. The rinse assembly includes at least one blower unit having a housing with an air inlet and an air outlet. The air inlet is in communication with a motor unit to draw air into the housing. The rinse assembly also includes a fluid nozzle disposed on the blower unit and in communication with a fluid source to direct fluid onto the vehicle exterior. The rinse assembly includes an actuator in communication with the at least one blower unit to direct air emitted from the air outlet in different preselected directions with respect to the vehicle exterior. The rinse assembly is in communication with a controller such that air from the air outlet and fluid from the fluid nozzle are emitted simultaneously onto the vehicle exterior surface to remove excess water therefrom. The controller is also in communication with the actuator to vary the direction of air flow in response to a location of the vehicle with respect to the at least one blower unit.

The invention is defined by the appended independent claims.

### BRIEF DESCRIPTION OF THE DRAWINGS

Other aspects of the present disclosure will be readily appreciated, as the same becomes better understood by reference to the following detailed description when considered in connection with the accompanying drawings where:
FIG. 1 is a schematic illustration of a prior art vehicle treatment component having a plurality of dryer assemblies;
FIG. 2A is a side view of a prior art vehicle treatment component having a plurality of dryer assemblies in operation and oriented at a fixed angle relative to a vehicle in a vehicle treatment area;
FIG. 2B is a top view of the prior art vehicle treatment component of FIG 2A;
FIG 3A is a side view of a prior art vehicle treatment component with a dryer assembly oriented at a fixed rearward facing angle with respect to a vehicle in one position in a vehicle treatment area;
FIG 3B is a side view of the prior art vehicle treatment component of FIG 3A with a vehicle in another position in a vehicle treatment area;
FIG. 4 is a perspective view of an exemplary vehicle rinse assembly for a vehicle wash system in accordance with an aspect of the present disclosure;
FIG. 5 is an exploded view of an exemplary vehicle rinse assembly for a vehicle wash system in accordance with an aspect of the present disclosure;
FIG. 6 is a perspective view of a vehicle treatment component including a plurality of vehicle rinse assemblies in accordance with an aspect of the present disclosure;
FIG. 7 is a perspective view of a vehicle treatment component having a rinse assembly in accordance with another aspect of the present disclosure;
FIG. 8 is a front view of a vehicle treatment component having a rinse assembly in accordance with another aspect of the present disclosure;
FIG. 9 is front view of vehicle rinse assembly in accordance with another aspect of the present disclosure;
FIG. 10 is a cross-sectional view of the vehicle rinse assembly of FIG 9 in the direction of the arrows 10-10; and
FIG 11A is a side view of an exemplary vehicle rinse assembly for a vehicle wash system treating a forward portion of a vehicle in accordance with an aspect of the present disclosure;
FIG 11B is a side view of the exemplary vehicle rinse assembly of FIG 11A partially broken away treating a middle portion of a vehicle in accordance with an aspect of the present disclosure;
FIG 11C is side view of the exemplary vehicle rinse assembly of FIG 11A treating a rearward portion of a vehicle in accordance with an aspect of the present disclosure; and
FIG. 12 is a flowchart of a method of rinsing a vehicle traveling through a vehicle wash utilizing an improved vehicle rinse assembly according to an aspect of the present disclosure.

### DETAILED DESCRIPTION OF THE DISCLOSURE

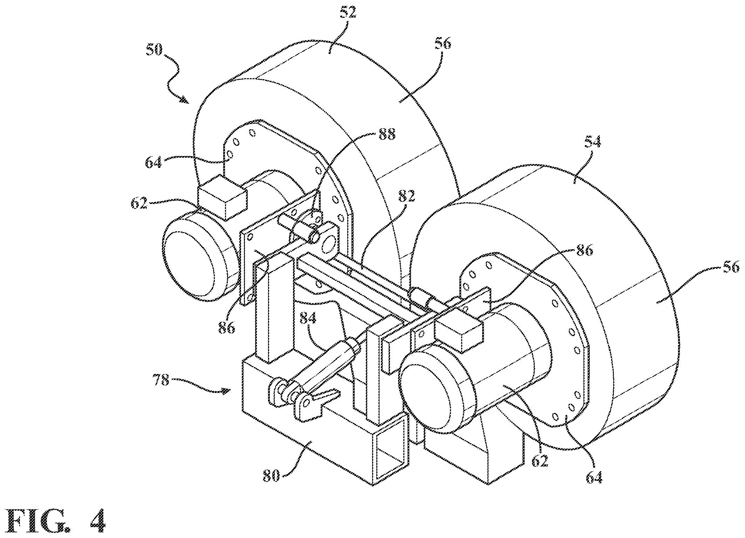

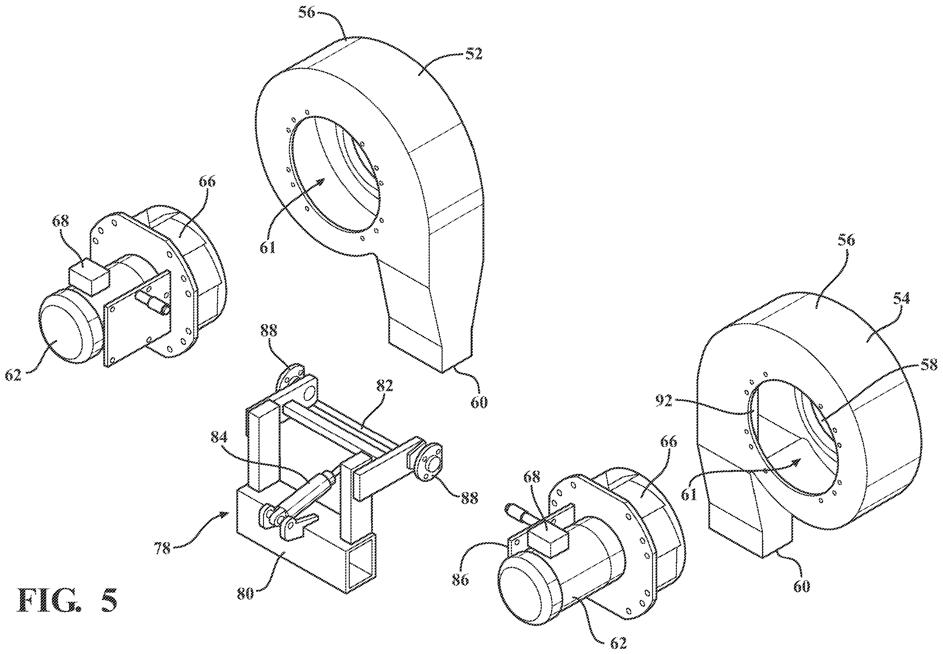

Detailed aspects of the present disclosure are disclosed herein; It is not intended that these examples illustrate and describe all possible forms of the disclosure. Rather, the words used in the specification are words of description rather than limitations. As those of ordinary skill in the art will understand, various features of the present disclosure are illustrated and described with reference to the Figures and may be combined with features illustrated in one or more other Figures to produce aspects of the present disclosure that are not explicitly illustrated or described in any individual drawing. The combinations of features illustrated provide representative examples for typical applications. With reference to FIGs 4 through 6, a vehicle dryer assembly **50** for a vehicle wash system in accordance with an aspect of the present disclosure is shown. According to an aspect, the vehicle dryer assembly **50** may include a pair of dryer units **52**, **54**. According to an aspect, as shown, each of the dryer units **52**, **54** may be substantially identical in construction and operation except for being mirror images of one another. As such, the description of one dryer unit applies equally to the other. Each of the dryer units **52**, **54** may include a housing **56** with an air inlet **58** and an air outlet **60**. Each of the dryer units **52**, **54** may include a motor unit **62**, which may be secured to a backside of the housing **56** by a plate **64** to generally seal that side of the housing. The motor unit **62** may be in communication with an impeller **66** to effect rotation thereof in order to draw air into housing **56** through the air inlet **58**. The air inlet **58** may have a screen disposed there over to block entry of objects into the housing. The motor unit **62** may in electrical communication with a system controller via an electrical connector box **68**. The motor unit **62** may be electrically driven. However, a variety of other suitable types of motors or drive devices may be employed. According to another aspect, the housing **56** may be formed of a plastic material. However, it will be appreciated that a variety of other suitable materials may be employed. Additionally, the housing may be formed of a translucent material and may further include one or more lights **92** for illuminating the housing as is disclosed in Applicant's co-pending U.S. Patent Application Serial No. 15/067,587, entitled "Vehicle Wash Dryer Assembly", filed on March 11, 2016.

As shown, the air inlet **58** may be substantially open at all times. According to a further aspect, the air inlet **58** may include a variable flow mechanism to regulate the rate of air flow into the housing through the air inlet **58** and thus the air outlet **60**. An exemplary variable flow mechanism that may be employed with the vehicle dryer assembly **50** is disclosed in U.S. Patent Application No. 15/589,401, entitled "A Mechanism for Selectively Opening/Closing a Vehicle Wash Component Inlet Opening", filed May 8, 2017.

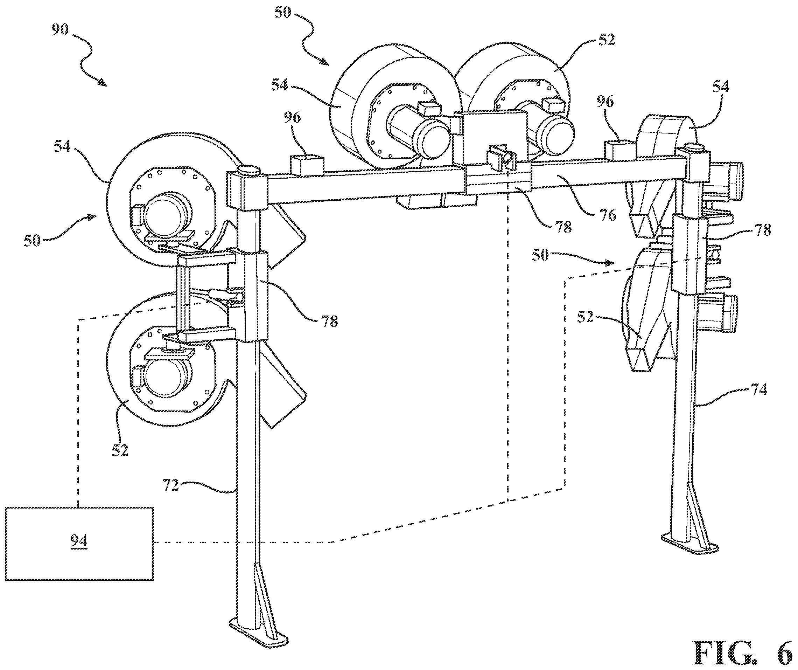

According to another aspect, each of the dryer units **52**, **54** may be secured to a frame **70** having a pair of upstanding legs **72**, **74** and an overhead boom **76** (FIG 6). It will be appreciated that the frame **70** may be disposed adjacent and over the vehicle treatment area. It will be appreciated that separate dryer assemblies **50** may be disposed on each of the upstanding legs **72**, **74** as well as the overhead boom **76**. Each of the dryer assemblies may have the identical configuration. As such, the description of one applies equally to all. It will also be appreciated that the dryer assemblies **50** mounted to different portions of the frame **70** can have different configurations as desired. According to an aspect, the dryer units **52**, **54** may be secured to the frame **70** by a mount bracket **78**. The mount bracket **78** may include clamp portion **80** that is configured to engage and secure the mount bracket **78** to the overhead boom **76** or the legs **72**, **74.** According to a further aspect, the mount bracket **78** can include a drive bar **82** which may be in communication with a cylinder **84** to effectuate movement of the drive bar **82** and thus pivoting of the dryer assembly **50**. According to an aspect, the cylinder **84** may be a pneumatic cylinder. However, a variety of other types of cylinders may be employed, such as a hydraulic cylinder. Alternatively, other suitable drive mechanism or actuators may be employed to effect movement of the drive bar **82**. According to an aspect, the cylinder **84** may be in electrical communication with a system controller **94** in order to actuate the cylinder **84** between an extended position and a retracted position.

According to an aspect, each dryer unit **52**, **54** may be pivotally secured to the mount bracket **78**. Specifically, as shown, each motor unit **62** may have an attachment plate **86** secured thereto, which is in turn mounted to a bearing **88** disposed adjacent either end of the drive bar **82**. According to an aspect, pivoting of the drive bar **82** can cause the dryer assembly **50** to move in order to change the direction in which air is emitted from the air outlet **60.** According to an aspect, the cylinder **84** may normally be in an extended position such that the dryer assembly **50** is positioned so that air flow through the air outlet **60** is directed rearward, i.e. against the direction of travel of the vehicle. According to a further aspect, the cylinder **84** may be actuated to a retracted position to cause the dryer assembly **50** to move to a position where air flow through the air outlet **60** is directed forwardly, i.e. with the direction of travel of the vehicle. Alternatively, in the retracted position, the dryer assembly **50** may be moved to a position where air flow through the air outlet **60** is directed generally perpendicularly downward. It will be appreciated that the dryer assembly may be pivoted or rotated in a variety of other suitable ways.

According to an aspect, the improved dryer assembly **50** may also be in communication with a sensor assembly via the controller **94**. According to another aspect, the controller **94** may be communicatively connected to the sensor assembly via a wired or wireless connection. As discussed above, the controller **94** may also be connected to cylinder **84** to effect movement thereof between the extended and retracted positions. According to an aspect, the controller may be pre-programmed with control logic for activating and controlling movement of the actuator and thus the direction of air flow from the dryer assembly **50**. With respect to the sensor assembly, it may include one or more sensors for detecting a location of a vehicle as it travels towards, underneath, and away from the frame. According to an aspect, this information may be communicated to the controller **94** which may actuate the cylinder **84** depending upon the location of the vehicle, as discussed in more detail herein. The one or more sensors may be disposed on the frame, on each dryer unit or at other locations within the vehicle wash facility. It will be appreciated that a variety of other suitable detection mechanisms for determining the location of a vehicle in the vehicle wash may be employed.

FIG. 6 is a perspective view of a vehicle treatment component **90** disposed adjacent a vehicle treatment area in accordance with an aspect of the present disclosure. As shown, the vehicle treatment component **90** can include a plurality of vehicle dryer assemblies **50** individually mounted to the frame **70** via mount brackets **78**, which may be angled in the same or different directions depending on location of the vehicle. According to an aspect, one dryer assembly **50** may be mounted to the overhead boom **76** and one may be mounted to each of the legs **72**, **74**. A single sensor assembly and controller **94** may be used to detect the vehicle and adjust the plurality of vehicle dryers assemblies **50** based on the location of the vehicle relative to the frame **70**, as discussed herein. Alternatively, there may be a sensor assembly and controller associated with each of the vehicle dryer assemblies **50** individually such that their positions may be separately controlled.

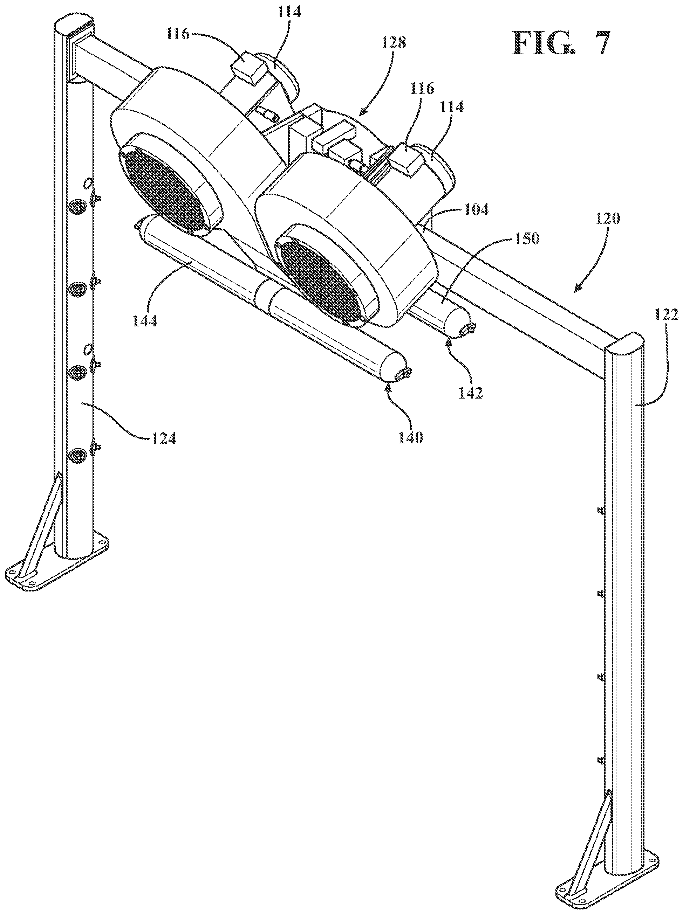

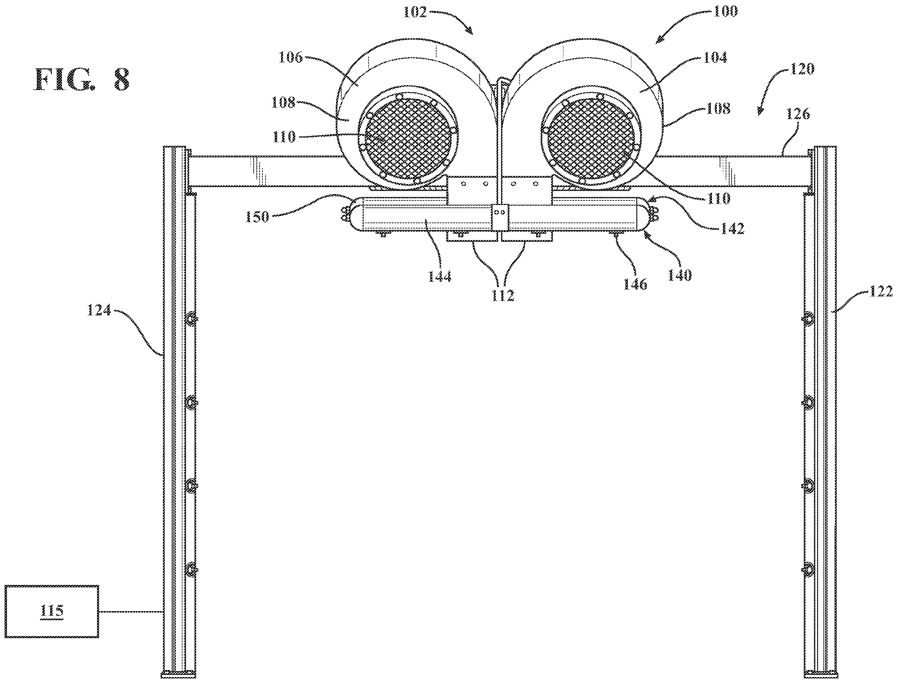

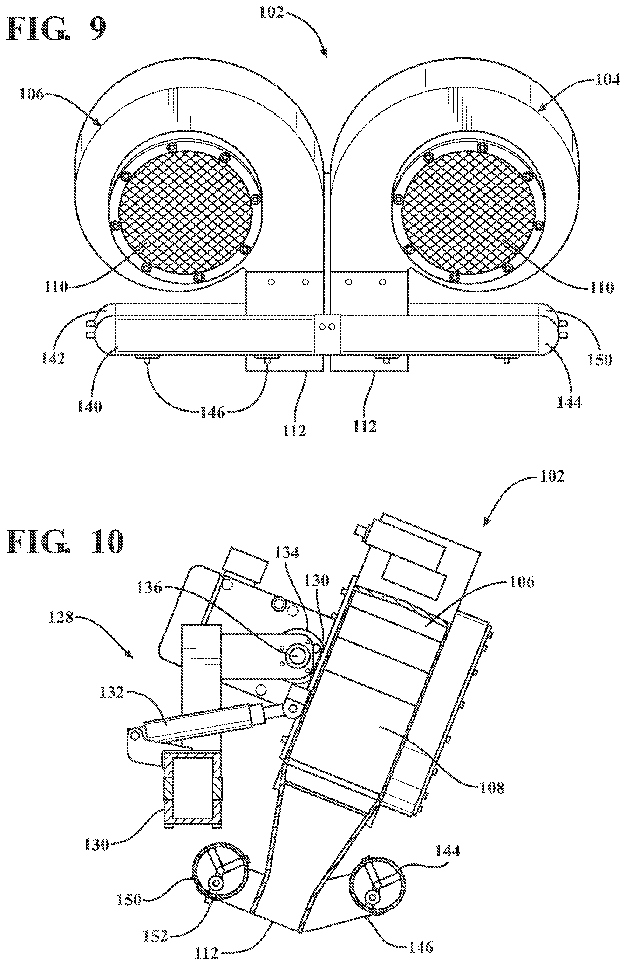

FIGs 7 through 10 illustrate a vehicle wash component **100**, including a rinse assembly **102** according to another aspect of the present disclosure. According to this aspect, the vehicle rinse assembly **102** may include a pair of blower units **104**, **106**, which may be substantially identical in construction and operation except, as shown, they may be mirror images of one another. Each of the blower units **104**, **106** may include a housing **108** with an air inlet **110** and an air outlet **112.** Each of the blower units **104**, **106** may include a motor unit **114,** which may be secured to a backside of the housing **108** by a plate or the like. The motor unit **114** may include an impeller to effect rotation thereof in order to draw air into the housing **108** through the air inlet **110**. The motor unit **114** may be electrically driven and may be in communication with a system controller **115** via electrical connector box **116**. It will be appreciated that a variety of other suitable motors or drive devices may be employed. It will also be appreciated that the housing can be formed of a variety of suitable materials. As shown, the air inlet **110** may be substantially open at all times. According to a further aspect, the air inlet **110** may include a variable flow mechanism to regulate the rate of air flow into the housing **108** through the air inlet **58**, as is discussed above.

According to another aspect, each of the blower units **104**, **106** may be secured to a frame **120** having a pair of upstanding legs **122**, **124** and an overhead boom **126**. It will be appreciated that the frame **120** may be disposed adjacent and over the vehicle treatment area. It will be appreciated that separate rinse assemblies **102** may be disposed on each of the upstanding legs **122**, **124**. According to an aspect, the rinse assembly **102** may be secured to the frame **120** by a mount bracket **128**. The mount bracket **128** may include a clamp portion **130** that is configured to engage and secure the mount bracket **128** to the overhead boom **126**. According to a further aspect, the mount bracket **128** can include a drive bar **130** which may be in communication with a cylinder **132** to effectuate movement of the drive bar **130**. According to an aspect, the cylinder **132** may be a pneumatic cylinder. However, a variety of other types of cylinders may be employed, such as a hydraulic cylinder. Alternatively, other suitable drive mechanism or actuators may be employed to effect movement of the drive bar **130**. The cylinder **132** may be in electrical communication with the system controller **115** in order to actuate the cylinder **132** between an extended position and a retracted position. It will be appreciated that the cylinder **132** can by actuated to various intermediate positions as desired to provide additional air flow directions.

According to an aspect, each blower unit **104**, **106** may be pivotally secured to the mount bracket **128**. Specifically, as shown, each blower unit **104**, **106** may be mounted via the motor unit **114** to a bearing **134** at a pivot point **136.** According to an aspect, moving the drive bar **130** can cause the rinse assembly **102** to pivot about pivot point **136** in order to change the direction in which air is emitted from the air outlet **112** with respect to an exterior of a vehicle surface. According to an aspect, the cylinder **132** is normally in the extended position such that the rinse assembly **102** is positioned to emit air flow through the air outlets **112** rearward, i.e. against the direction of travel of the vehicle. According to another aspect, the cylinder **132** may be actuated such that it moves to a retracted position causing the rinse assembly **102** to move to a position where air flow through the air outlets **112** may be directed forwardly, i.e. with the direction of travel of the vehicle. Alternatively, when the cylinder **132** is in the retracted position, the rinse assembly **102** may be rotated to a position where air flow through the air outlets **112** may be directed generally perpendicularly downward with respect to an exterior of a vehicle surface. It will be appreciated that the rinse assembly may be pivoted or rotated in a variety of other suitable ways. It will also be appreciated that the cylinder **132** may also be normally position in a retracted position such that the rinse assembly **102** is positioned to emit air flow through the air outlets **112** rearward.

According to another aspect, the rinse assembly **102** may further include a first fluid portion **140**, and a second fluid portion **142**. According to an aspect, the first fluid portion **140** may be disposed on the upstream side of the air outlets **112** as defined by the direction of travel of the vehicle. The first fluid portion **140** may include a first manifold portion **144** that is in communication with a plurality of nozzle portions **146**. According to an aspect, the first manifold portion **144** may be in communication with a fluid supply, such as a supply of water. However, the first manifold portion **144** may be in communication with a variety of other fluids. The first fluid portion **140** may be configured to emit fluid through the plurality of fluid nozzles **146** onto an exterior surface of a vehicle, such as a top surface. According to an aspect, the plurality of nozzle portions **146** may be configured such that fluid can be directed onto the vehicle exterior at an angle. According to another aspect, the plurality of nozzle portions **146** may be configured to direct air at a rearward angle, i.e., in a direction toward a rear of a vehicle. It will also be appreciated that the direction and magnitude of the angle may also vary. For example, the plurality of nozzle portions **146** may be configured to emit fluid toward the front of the vehicle, i.e. with the direction of vehicle travel. Alternatively, the plurality of nozzle portions **146** can direct fluid in a direction generally parallel to the air flow though outlets **112**. According to an aspect, as discussed herein, the flow of fluid from the plurality of nozzle portions **146** can match the flow of air from the air outlets **112** of the rinse assembly **102**.

According to a further aspect, the second fluid portion **142** may be disposed downstream of the first fluid portion **140** as defined by the direction of travel of the vehicle. The second fluid portion **142** can include a second manifold portion **150** that is in communication with a plurality of nozzle portions **152**. According to an aspect, the second manifold portion **150** may also be in communication with a supply of fluid. According to another aspect, the fluid supply for the second fluid portion **142** may be a drying agent. However, the second fluid portion **142** may be in communication with a variety of other suitable fluids. The second fluid portion **142** may be configured to emit fluid through the plurality of nozzle portions **152** onto an exterior side surface of a vehicle, such as a top surface. According to an aspect, the plurality of nozzle portions **152** may be oriented such that fluid can be directed onto the vehicle exterior at an angle. According to another aspect, the plurality of nozzle portions **152** may be configured to direct air at a rearward angle, i.e., in a direction toward a rear of a vehicle. However, it will be appreciated that the magnitude and direction of the angle may vary and that the direction of fluid flow through the plurality of nozzle portions **152** may be directed forwardly, i.e. toward the front of the vehicle. Alternatively, the plurality of nozzle portions **152** can direct fluid in a direction generally parallel to the air flow though outlets **112**. According to an aspect, as discussed herein, the flow of fluid from the plurality of nozzle portions **152** can match the flow of air from the air outlets **112** of the rinse assembly **102**.

According to an aspect, the first fluid portion **140** and the second fluid portion **142** may be fixedly secured to the rinse assembly **102**. According to a further aspect, the first fluid portion **140** and the second fluid portion **142** may be secured to the rinse assembly **102** adjacent the air outlets **112**. According to an aspect, as the cylinder **132** moves between a retracted and extended position to vary the direction of air flow through the air outlet **112**, the direction of the fluid emitted from the first and second manifold **140**, **150** similarly varies. It will be appreciated that the location and configuration of the first fluid portion **140** and the second fluid portion **142** may vary as desired.

According to another aspect, individual front and back fluid portions **160**, **162** may be disposed on the leg portions **122**, **124** of the frame **120**. The front and back fluid portions **160**, **162** may have the same general configuration as the first fluid portion **140** and the second fluid portion **142**. As shown, the front and back fluid portions **160**, **162** may be configured to emit separate fluids on to side exterior surfaces of a vehicle without air being emitted thereto in order to dry the side vehicle surfaces. According to another aspect, the front and back fluid portions **160**, **162** may be in communication with a controller to move so as to change their direction of fluid flow. According to still another aspect, the front and back fluid portions **160**, **162** may remain in a fixed position to emit fluid in a single direction. Alternatively, the may be configured to emit a spray. According to still yet another aspect, the front and back fluid portions **160**, **162** may be emit the same or different fluids.

According to an aspect, the controller **115** may be configured to actuate the vehicle wash component **12** as the vehicle approaches the component and then turn it off after the vehicle passes. As is known, in operation, a vehicle may have soap, bubbles and/or foam applied to its exterior during the vehicle wash process. According to an aspect, once the vehicle is cleaned, it can pass to the vehicle wash component **100**. The controller can actuate the blower units **104**, **106** simultaneously with the first and second fluid portions **140**, **142** and the front and back fluid portions **160**, **162**. The synergistic combination of air and water surprisingly and unexpectedly has worked better than simply using air alone as part of this final drying step.

According to another aspect, application of a drying agent from the second fluid portion **142** after the air and water from the first manifold portion **140** can help to more effectively dry the vehicle exterior surface. In other words, as is known, the drying agent can serve to sheet the water off the vehicle surface. According to a further aspect, the combination of air and water leaves less water on the vehicle surface such that the drying agent can work more effectively, which decreases the amount of water remaining on the surface at the completion of the drying process.

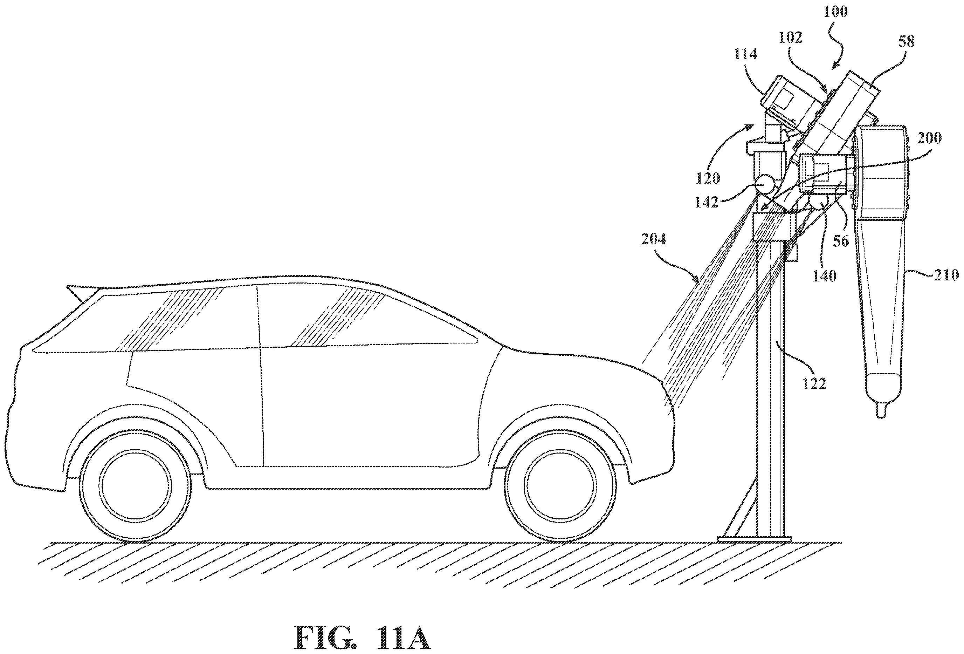

FIGs. 11A-11C schematically illustrate aspects of a vehicle rinse assembly **200** for a vehicle wash system in operation treating portions of a vehicle exterior in accordance with various aspects of the disclosure. Specifically, according to an aspect, FIGs. 11A-11C illustrate how the position of the vehicle rinse assembly **200** can adjust as a vehicle travels under the frame **202** to which the vehicle rinse assembly **200** is mounted in order to provide improved drying capabilities for all vehicle surfaces.

According to an aspect, FIG.11A exemplarily illustrates the vehicle rinse assembly **102** in a first position with the air outlet **112** directed at a first rearward angle **200** as the vehicle **202** approaches the frame **120**. As shown, at the angle **200**, air emitted from the air outlet **112** can be emitted rearward, as generally shown by reference number **204**. According to another aspect, the first nozzle portions **146** and the second nozzle portions **152** are similarly directed rearward such that fluid from the first and second fluid sources can also be directed onto a front of the vehicle. Thus, in operation, as a vehicle approaches the frame **120**, a sensor or other detection mechanism (such as a timing device) can detect the location of the vehicle and communicate that to the controller. Based on the detected vehicle location, when the vehicle **202** reaches a predetermined distance from the rinse assembly **200**, the controller **115** can communicate with the vehicle rinse assembly **200** to ensure that the cylinder **132** is in an extended position such that the air outlet **112** is oriented rearward. The controller **115** can also communicate with the rinse assembly **200** at this time to turn on the motor unit **114** such that high velocity air is directed through the air outlet **112** toward the front of the vehicle, as shown in FIG 11A.

Simultaneously, the controller **115** may communicate with the first and second fluid portions **140**, **142** in order to emit water and a drying agent respectively from the first nozzle portions **146** and the second nozzle portions **152**. According to another aspect, because the first and second manifold portions **144**, **150** are secured to the rinse assembly **102** adjacent the air outlet **112**, the first and second nozzle portions **146** and **152** are also directed rearward to emit water and drying agent onto a front surface of the vehicle.

In operation, the combination of water from the first nozzle portions **146** and high velocity air from the air outlet **112** may be applied in combination to the front of the vehicle to help remove excess water from the vehicle exterior. Thereafter, the drying agent can be applied to the vehicle exterior from the second nozzle portions **152** to sheet off any additional remaining water. As discussed above, it will be appreciated that a variety of other suitable fluids may be employed from either or both the first nozzle portions **146** and the second nozzle portions **152**. Additionally, as shown, rinse assemblies **210** according to the present disclosure may also be disposed on other portions of the frame **120**, such as the leg portions **122**, **124**.

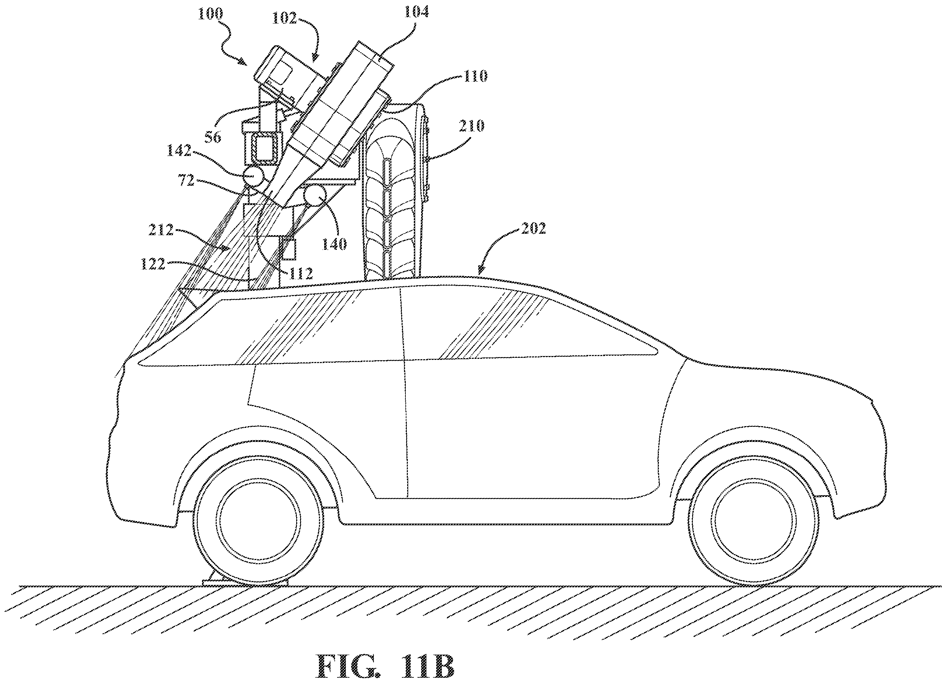

As schematically shown in FIG 11B, as the vehicle continues to move under the frame **120**, the vehicle rinse assembly **120** may be oriented with the air outlet **112** in the first position, i.e., the cylinder **132** remains in the extended position, such that high velocity air emitted from the air outlet **112** is directed onto the top surface of the vehicle **202** in a generally rearward direction, as indicated by reference number **212**. Similarly, according to the aspect where the first and second manifold portions **144**, **150** are secured to the rinse assembly **102** adjacent the air outlet **112**, the first and second nozzle portions **146** and **152** may also be directed rearward to emit water and drying agent onto the top surface of the vehicle in a generally rearward direction. It will be appreciated that the amount of the rearward angle can be adjusted during the process such that the rinse assembly **102** may be oriented at a different angle for treating the top surface of the vehicle as opposed to the front. It will further be appreciated that the rinse assemblies **210** disposed on the leg portions **122**, **124** of the frame **120** may be directed by the controller **115** to emit air and/or fluid onto the vehicle surface at different angles than the rinse assembly **102**.

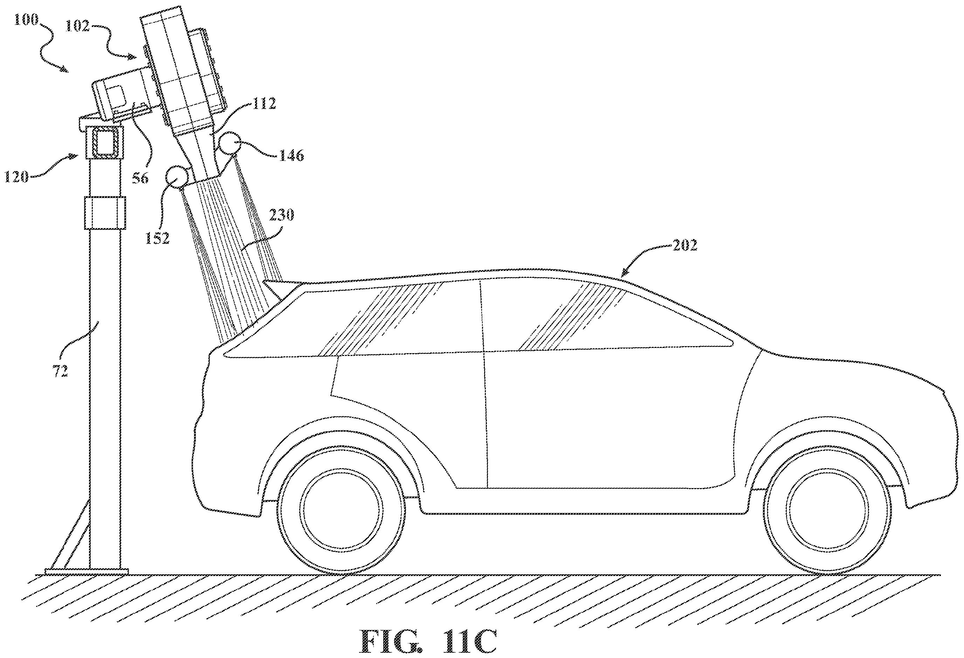

According to an aspect, as schematically shown in FIG 11C, as the vehicle continues to pass through the frame **120**, the controller **115** can communicate with the cylinder **132** such that it moves to the retracted position in order to "flip" the rinse assembly **102** so that the air outlet **112** can emit air in a direction at a second angle. According to an aspect, when the vehicle is detected as being in a predetermined position, the air outlet **112** may be oriented in the second positon. According to an aspect, the first and second plurality of nozzle portions **146**, **152** may be oriented to direct fluid in the same direction. To orient the rinse assembly **102** in the first position, the controller **115** can move the cylinder **132** to a retracted position such that the air outlet **112** can emit a stream of high velocity air in a forward direction as generally indicted by reference number **230**. Orienting the rinse assembly **102** in the second position, can allow air to be more accurately directed at the rear surfaces of a vehicle **202**.

As a result, one or more rinse assemblies **102**, **200** may be oriented to project air at different locations along the length of the vehicle **202** to adequately dry all vehicle surfaces. It can be readily appreciated by one skilled in the art that the rinse assembly **102** may be fixed in each of the first and second positions or alternatively may oscillate. According to a still further aspect, the controller **115** may be configured to orient the rinse assembly **102** at various different angles such that the air outlet **112** and the fluid nozzle portions **146**, **152** may have more than two positions at which to direct air and fluid onto the exterior surface of the vehicle **202**.

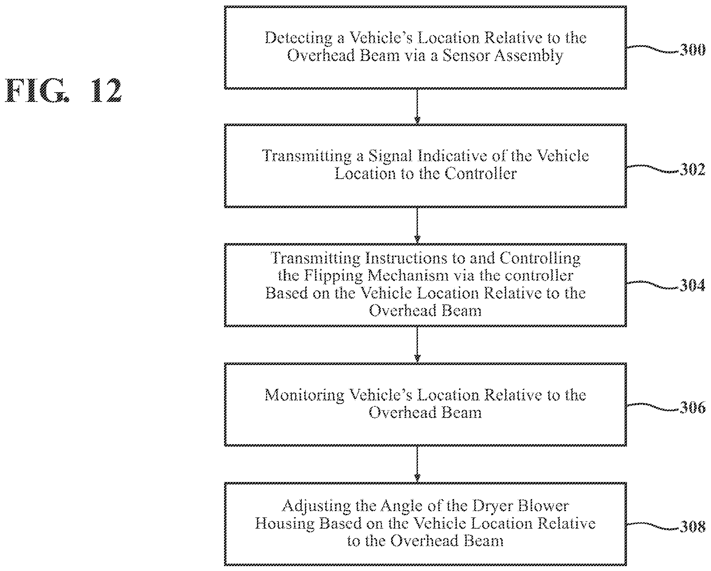

FIG. 12 is a flowchart schematically illustrating a method of drying a vehicle traveling through a vehicle wash utilizing a vehicle rinse assembly **102** in accordance with the present disclosure. According to an aspect, the method may include detecting a vehicle's location proximate or relative to the frame **120** via a detection mechanism, such as a sensor assembly. Once the vehicle's location is detected as generally indicated by reference number **300**, then a signal indicative of the vehicle location may be transmitted to the controller **115**, as generally indicated by reference number **302**. The controller **115** may also transmit instructions and control the flipping or actuator mechanism such as, but not limited to, a pneumatic cylinder such that the rinse assembly **102** may be moved to a desired position with the air outlet and the first and second fluid nozzle portions **146**, **152** at the desired angle with respect to the vehicle exterior, as generally indicated by reference number **304**. According to an aspect, the location of the vehicle with respect to the frame **120** and the rinse assembly **102** may be monitored as it moves along the conveyor such that the controller **115** may adjust the angle of the rinse assembly in order to direct air and fluid onto all vehicle surfaces, as generally indicated by reference number **308**.

It will also be appreciated while the rinse assembly **102** is illustrated as incorporated into a conveyor wash; it can also be incorporated into a roll over wash system where the rinse assembly **102** moves with respect to a stationary vehicle. According to this aspect, the rinse assembly **102** may also be in communication with a controller and a detection assembly that directs when to modify the orientation of the rinse assembly **102** in order to change the direction of flow of air and fluid from the rinse assembly **102**. This will allow the rinse assembly **102** to account for vehicles of different sizes to ensure proper drying of all surfaces.

The aspects of the present disclosure provide for an improved vehicle rinse assembly for a vehicle wash system and a method of drying a vehicle utilizing an improved vehicle rinse assembly. According to an aspect, the actuator mechanism can allow the rinse assembly to dynamically position itself such that air is projected to portions of the vehicle exterior that would not otherwise be reached if the blower units remain fixed. In other words, the disclosed vehicle rinse assembly may more effectively dry all surfaces of the vehicle, including compound surfaces unlike the current dryer equipment shown in FIGS. 1-3B. In operation, the sensor assembly may detect the vehicle approaching the frame, the sensor assembly may transmit a signal indicative of the vehicle approaching the frame to the controller, and the controller may instruct the actuator mechanism to actuate or rotate to a desired position or angle. The sensor assembly may continue to detect the vehicle as the vehicle to move under the frame and the controller may direct the cylinder/actuator mechanism accordingly, forcing the blower unit to project air and fluid onto the vehicle at the angles required to adequately dry the vehicle such as the rear surface of the vehicle. In another aspect, the cylinder **132** may have a locking mechanism to lock the rinse assembly into the desired position such that the rinse assembly does not oscillate once the desired position is reached.

## Claims

1. A vehicle rinsing assembly (102) for treating a vehicle exterior surface, comprising:
at least one blower unit (52, 54, 104, 106) having:
a housing (56, 108);
an air inlet (58, 110) formed in the housing (56, 108);
a motor unit (62, 114) in communication with the housing (56) to draw air into the air inlet (58, 110); and
an air outlet (60, 102) for emitting a stream of high velocity air from the blower unit (52, 54, 104, 106) toward the vehicle exterior surface;
a first fluid outlet (146, 152) disposed adjacent the blower unit (52, 54, 104, 106) and in communication with a first fluid source to direct a spray of a first fluid toward the vehicle exterior surface; **characterized in that** the vehicle rinsing assembly further comprises:
an actuator (84, 132) in communication with the at least one blower unit (52, 54, 104, 106) and configured to vary a direction of the stream of high velocity air from the air outlet (60, 102) with respect to the vehicle exterior surface; and
a controller (115) in communication with the motor unit (62, 114) and the first fluid outlet (146, 152) in order to emit air and fluid simultaneously toward the vehicle exterior surface in the same general direction;
whereby the controller (94, 115) is further in communication with the actuator (84, 132) to vary the direction of the stream of high velocity air and the spray of the first fluid in response to the location of the vehicle with respect to the rinsing assembly (102).

2. The assembly of claim 1, wherein the actuator (84, 132) can be moved between a first position and a second position;
wherein, in the first position, the air outlet (60, 112) is oriented such that the direction of the stream of high velocity air from the blower (52, 54, 104, 106) is directed in a rearward direction; and
wherein, in the second position, the air outlet (60, 112) is configured to emit the stream of high velocity air from the blower (52, 54, 104, 106) and the spray of the first fluid in a forward direction.

3. The assembly of claim 2, wherein the controller (94, 115) is configured to communicate with the actuator (84, 132) to move the actuator (84, 132) to the second position in order to direct the stream of high velocity air and the stream of the first fluid toward one or more rear exterior vehicle surfaces.

4. The assembly of claim 2, wherein the actuator (84, 132) is a cylinder having an extended position which corresponds to the first position and a retracted position which corresponds to the second position.

5. The assembly of claim 1, wherein the controller (94, 115) is in communication with a vehicle detection mechanism to detect the location of the vehicle with respect to the rinsing assembly (102); and
wherein the controller (94, 115) is configured to direct the actuator (84, 132) to vary the direction of the stream of high velocity air and the spray of the first fluid based on certain predetermined detected vehicle locations with respect to the rinsing assembly (102).

6. A vehicle rinsing assembly (102) for a vehicle wash system, comprising:
at least one blower unit (52, 54, 104, 106) having:
a housing (56, 108) with an air inlet (58, 110) and an air outlet (60, 102);
a motor unit (62, 114) disposed adjacent the air inlet (58, 110) and including an impeller (66) to draw air into the housing (56, 108) and emit a stream of high velocity air from the air outlet (60, 102);
a first fluid outlet (146) secured adjacent the housing (56, 108) on one side of the air outlet (60, 102), the first fluid outlet (146) in communication with a first supply of fluid to a emit a first fluid spray;
a second fluid outlet (152) secured to the housing adjacent an opposing side of the air outlet (60, 102), the second fluid outlet (152) in communication with a second supply of fluid to emit a second fluid spray; **characterized in that** the vehicle rinsing assembly further comprises:
an actuator (84, 132) in communication with the housing (56, 108) and configured to vary a direction of the air outlet (60, 102) such that the stream of high velocity air may be emitted in different directions; wherein the actuator (84, 132) has a first position and a second position; whereby, in the first position, the air outlet (60, 102), the first fluid outlet (146), and the second fluid outlet (152) are all configured to emit the stream of high velocity air, the first fluid spray, and the second fluid spray, respectively, in a forward direction;
whereby, in the second position, the air outlet (60, 102), the first fluid outlet (146), and the second fluid outlet (152) are all configured to emit the stream of high velocity air, the first fluid spray, and the second fluid spray, respectively, in a rearward direction.

7. The assembly of claim 6, wherein the first fluid spray is a water spray and the first fluid outlet (146) is disposed on an upstream side of the air outlet (60, 102).

8. The assembly of claim 7, wherein the second fluid spray is a spray of drying agent and the second fluid outlet (152) is disposed on a downstream side of the air outlet (60, 102).

9. The assembly of claim 6 wherein the actuator (84, 132) is a cylinder having an extended position which corresponds to the first position and a retracted position which corresponds to the second position.

10. The assembly of claim 6, wherein the actuator (84, 132) is in communication with a controller (94, 115) to direct movement thereof to the first position and the second position based on certain predetermined locations of a vehicle with respect to the frame (70, 120).

11. The assembly of claim 10, further comprising:
a vehicle detection mechanism for determining a location of a vehicle with respect to the rinsing assembly (102) and communicating the detected location to the controller (94, 115).

12. The assembly of claim 6, wherein the at least one blower unit (52, 54, 104, 106) is secured to a frame (70, 120) such that the actuator (84, 132) can pivot the at least one blower unit (52, 54, 104, 106) to vary the direction of the stream of high velocity air.

13. A vehicle rinsing component for a vehicle exterior, comprising:
a frame (70, 120) disposed adjacent a vehicle treatment area;
a blower assembly (52, 54, 104, 106) secured to the frame (70, 120), the blower assembly (52, 54, 104, 106) including a pair of motorized impeller units (66) each having a housing (56, 108) with an air inlet (58, 110), an air outlet (60, 112) and a motor unit (62, 114) disposed adjacent the air inlet (58, 110) to draw air into the housing (56) and emit a stream of high velocity air from the air outlet (60, 112);
a plurality of first fluid outlets (146, 152) secured to_the blower assembly (52, 54, 104, 106) for emitting a first fluid spray; **characterized in that** the blower assembly (52, 54, 104, 106) is pivotally secured to the frame (70, 120) by a bracket (78, 128),
wherein the vehicle rinsing component further comprises an actuator (84, 132) in communication with the blower assembly (52, 54, 104, 106) to pivot the blower assembly (52, 54, 104 106) between a plurality of different positions in order that the stream of high velocity air and the first fluid spray may be emitted in multiple different directions with respect to an exterior of the vehicle;
whereby the blower assembly (52, 54, 104 106) is configured to emit the stream of high velocity air and the first fluid spray onto the exterior of the vehicle simultaneously in order to effectuate rinsing of the vehicle exterior.

14. The component of claim 13, further comprising:
a controller (94, 115) in communication with the actuator (84, 132) to direct the actuator to pivot the blower assembly (52, 54, 104 106) to the plurality of different positions based on a detected location of a vehicle.

15. The component of claim 14, wherein, in one of the plurality of positions, the air outlets (60, 112) are configured to emit the stream of high velocity air in a rearward direction.

## Patentansprüche

1. Fahrzeugspülanordnung (102) zum Behandeln einer Fahrzeugaußenfläche, umfassend: mindestens eine Gebläseeinheit (52, 54, 104, 106) aufweisend:
ein Gehäuse (56, 108);
einen Lufteinlass (58, 110), der in dem Gehäuse (56, 108) ausgebildet ist;
eine Motoreinheit (62, 114) in Verbindung mit dem Gehäuse (56), um Luft in den Lufteinlass (58, 110) anzusaugen; und
einen Luftauslass (60, 102) zum Abgeben eines Hochgeschwindigkeitsluftstroms von der Gebläseeinheit (52, 54, 104, 106) zu der Fahrzeugaußenfläche hin;
einen ersten Fluidauslass (146, 152), der angrenzend an die Gebläseeinheit (52, 54, 104, 106) angeordnet ist und in Verbindung mit einer ersten Fluidquelle steht, um einen Sprühstrahl eines ersten Fluids auf die Außenfläche des Fahrzeugs zu richten **dadurch gekennzeichnet, dass** die Fahrzeugspülanordnung ferner Folgendes umfasst:
ein Stellglied (84, 132), das mit der mindestens einen Gebläseeinheit (52, 54, 104, 106) in Verbindung steht und so konfiguriert ist, dass es eine Richtung des Hochgeschwindigkeitsluftstroms aus dem Luftauslass (60, 102) in Bezug auf die Fahrzeugaußenfläche variiert; und
eine Steuerung (115), die mit der Motoreinheit (62, 114) und dem ersten Fluidauslass (146, 152) in Verbindung steht, um gleichzeitig Luft und Fluid zur Fahrzeugaußenfläche in der gleichen allgemeinen Richtung abzugeben;
wobei die Steuerung (94, 115) ferner mit dem Stellglied (84, 132) in Verbindung steht, um die Richtung des Hochgeschwindigkeitsluftstroms und des Sprühstrahls des ersten Fluids in Abhängigkeit von der Position des Fahrzeugs in Bezug auf die Spülanordnung (102) zu variieren.

2. Anordnung nach Anspruch 1, wobei das Stellglied (84, 132) zwischen einer ersten Position und einer zweiten Position bewegt werden kann;
wobei der Luftauslass (60, 112) in der ersten Position so ausgerichtet ist, dass die Richtung des Hochgeschwindigkeitsluftstroms aus dem Gebläse (52, 54, 104, 106) in eine Rückwärtsrichtung gerichtet ist; und
wobei der Luftauslass (60, 112) in der zweiten Position so konfiguriert ist, dass er den Hochgeschwindigkeitsluftstrom aus dem Gebläse (52, 54, 104, 106) und den Sprühstrahl des ersten Fluids in einer Vorwärtsrichtung abgibt.

3. Anordnung nach Anspruch 2, wobei die Steuerung (94, 115) so konfiguriert ist, dass sie mit dem Stellglied (84, 132) in Verbindung steht, um das Stellglied (84, 132) in die zweite Position zu bewegen, damit der Hochgeschwindigkeitsluftstrom und der Strom des ersten Fluids auf eine oder mehrere hintere Fahrzeugaußenflächen gerichtet werden.

4. Anordnung nach Anspruch 2, wobei das Stellglied (84, 132) ein Zylinder ist, der eine ausgefahrene Position, die der ersten Position entspricht, und eine eingefahrene Position, die der zweiten Position entspricht, aufweist.

5. Anordnung nach Anspruch 1, wobei die Steuerung (94, 115) mit einem Fahrzeugerkennungsmechanismus in Verbindung steht, um die Position des Fahrzeugs in Bezug auf die Spülanordnung (102) zu erkennen; und
wobei die Steuerung (94, 115) so konfiguriert ist, dass sie das Stellglied (84, 132) so richtet, dass es die Richtung des Hochgeschwindigkeitsluftstroms und des Sprühstrahls des ersten Fluids auf der Grundlage bestimmter vorbestimmter erkannter Fahrzeugpositionen in Bezug auf die Anordnung (102) variiert.

6. Fahrzeugspülanordnung (102) für ein Fahrzeugwaschsystem, umfassend:
mindestens eine Gebläseeinheit (52, 54, 104, 106) aufweisend:
ein Gehäuse (56, 108) mit einem Lufteinlass (58, 110) und einem Luftauslass (60, 102);
eine Motoreinheit (62, 114), die angrenzend an den Lufteinlass (58, 110) angeordnet ist und ein Laufrad (66) enthält, um Luft in das Gehäuse (56, 108) zu saugen und einen Strom von Hochgeschwindigkeitsluft aus dem Luftauslass (60, 102) abzugeben;
einen ersten Fluidauslass (146), der angrenzend an das Gehäuse (56, 108) auf einer Seite des Luftauslasses (60, 102) gesichert ist, wobei der erste Fluidauslass (146) mit einem ersten Fluidvorrat in Verbindung steht, um einen ersten Fluidsprühstrahl abzugeben;
einen zweiten Fluidauslass (152), der an dem Gehäuse angrenzend an eine gegenüberliegende Seite des Luftauslasses (60, 102) befestigt ist, wobei der zweite Fluidauslass (152) mit einem zweiten Fluidvorrat in Verbindung steht, um einen zweiten Fluidsprühstrahl abzugeben; **dadurch gekennzeichnet, dass** die Fahrzeugspülanordnung ferner Folgendes umfasst:
ein Stellglied (84, 132), das mit dem Gehäuse (56, 108) in Verbindung steht und so konfiguriert ist, dass es eine Richtung des Luftauslasses (60, 102) variiert, so dass der Hochgeschwindigkeitsluftstrom in verschiedene Richtungen ausgestoßen werden kann; wobei das Stellglied (84, 132) eine erste Position und eine zweite Position aufweist; wobei in der ersten Position der Luftauslass (60, 102), der erste Fluidauslass (146) und der zweite Fluidauslass (152) alle so konfiguriert sind, dass sie den Hochgeschwindigkeitsluftstrom, den ersten Fluidsprühstrahl bzw. den zweiten Fluidsprühstrahl in eine Vorwärtsrichtung abgeben;
wobei in der zweiten Position der Luftauslass (60, 102), der erste Fluidauslass (146) und der zweite Fluidauslass (152) alle so konfiguriert sind, dass sie den Hochgeschwindigkeitsluftstrom, den ersten Fluidsprühstrahl und den zweiten Fluidsprühstrahl jeweils in eine Rückwärtsrichtung abgeben.

7. Anordnung nach Anspruch 6, wobei der erste Fluidsprühstrahl ein Wassersprühstrahl ist und der erste Fluidauslass (146) auf einer stromaufwärts gelegenen Seite des Luftauslasses (60, 102) angeordnet ist.

8. Anordnung nach Anspruch 7, wobei der zweite Fluidsprühstrahl ein Sprühstrahl aus Trocknungsmittel ist und der zweite Fluidauslass (152) auf einer stromabwärts gelegenen Seite des Luftauslasses (60, 102) angeordnet ist.

9. Anordnung nach Anspruch 6, wobei das Stellglied (84, 132) ein Zylinder ist, der eine ausgefahrene Position, die der ersten Position entspricht, und eine eingefahrene Position, die der zweiten Position entspricht, aufweist.

10. Anordnung nach Anspruch 6, wobei das Stellglied (84, 132) mit der Steuerung (94, 115) in Verbindung steht, um die Bewegung desselben in die erste Position und die zweite Position auf der Grundlage bestimmter vorbestimmter Positionen eines Fahrzeugs in Bezug auf den Rahmen (70, 120) zu richten.

11. Anordnung nach Anspruch 10, ferner umfassend:
einen Fahrzeugerkennungsmechanismus zum Bestimmen einer Position eines Fahrzeugs in Bezug auf die Fahrzeugspülanordnung (102) und zum Übermitteln der erkannten Position an die Steuerung (94, 115).

12. Anordnung nach Anspruch 6, wobei die mindestens eine Gebläseeinheit (52, 54, 104, 106) so an einem Rahmen (70, 120) gesichert ist, dass das Stellglied (84, 132) die mindestens eine Gebläseeinheit (52, 54, 104, 106) schwenken kann, um die Richtung des Hochgeschwindigkeitsluftstroms zu variieren.

13. Fahrzeugspülkomponente für eine Fahrzeugaußenseite, umfassend:
einen Rahmen (70, 120), der angrenzend an einen Fahrzeugbehandlungsbereich angeordnet ist;
eine am Rahmen (70, 120) gesicherte Gebläseanordnung (52, 54, 104, 106)
wobei die Gebläseanordnung (52, 54, 104, 106) ein Paar motorisierte Laufradeinheiten (66) enthält, die jeweils ein Gehäuse (56, 108) mit einem Lufteinlass (58, 110), einem Luftauslass (60, 112) und einer Motoreinheit (62, 114) aufweisen, die neben dem Lufteinlass (58, 110) angeordnet ist, um Luft in das Gehäuse (56) zu saugen und einen Hochgeschwindigkeitsstrom aus dem Luftauslass (60, 112) abzugeben;
eine Vielzahl von ersten Fluidauslässen (146, 152), die an der Gebläseanordnung (52, 54, 104, 106) gesichert sind, um einen ersten Fluidsprühstrahl abzugeben; **dadurch gekennzeichnet, dass** die Gebläseanordnung (52, 54, 104, 106) schwenkbar an dem Rahmen (70, 120) durch einen Träger (78, 128) gesichert ist,
wobei die Fahrzeugspülkomponente ferner Folgendes umfasst:
ein Stellglied (84, 132), das in Verbindung mit der Gebläseanordnung (52, 54, 104, 106) steht, um die Gebläseanordnung (52, 54, 104, 106) zwischen einer Vielzahl verschiedener Positionen zu schwenken, damit der Hochgeschwindigkeitsluftstrom und der erste Fluidsprühstrahl in mehrere verschiedene Richtungen in Bezug auf eine Außenseite des Fahrzeugs abgegeben werden können;
wobei die Gebläseanordnung (52, 54, 104, 106) so konfiguriert ist, dass sie den Hochgeschwindigkeitsluftstrom und den ersten Fluidsprühstrahl gleichzeitig auf die Außenseite des Fahrzeugs abgibt, um eine Spülung der Fahrzeugaußenseite zu bewirken.

14. Komponente nach Anspruch 13, ferner umfassend:
eine Steuerung (94, 115), die mit dem Stellglied (84, 132) in Verbindung steht, um das Stellglied anzuweisen, die Gebläseanordnung (52, 54, 104, 106) auf der Grundlage einer erfassten Position eines Fahrzeugs in die Vielzahl von verschiedenen Positionen zu schwenken.

15. Komponente nach Anspruch 14, wobei in einer der Vielzahl von Positionen die Luftauslässe (60, 112) so konfiguriert sind, dass sie den Hochgeschwindigkeitsluftstrom in einer Rückwärtsrichtung abgeben.

## Revendications

1. Ensemble de rinçage de véhicule (102) pour traiter une surface extérieure de véhicule, comprenant : au moins une unité de ventilation (52, 54, 104, 106) possédant:
une enveloppe (56, 108) ;
une entrée d'air (58, 110) moulée dans l'enveloppe (56, 108) :
une unité moteur (62, 114) en communication avec l'enveloppe (56) pour aspirer de l'air dans l'entrée d'air (58, 110) ; et
une sortie d'air (60, 102) pour émettre un flux d'air à grande vitesse à partir de l'unité de ventilation (52, 54, 104, 106) en direction de la surface extérieure de véhicule ;
une sortie de premier liquide (146, 152) disposée à côté de l'unité de ventilation (52, 54, 104, 106) et en communication avec une première source de liquide pour diriger une pulvérisation d'un premier liquide en direction de la surface extérieure de véhicule ;
un actionneur (84, 132) en communication avec la au moins une unité de ventilation (52, 54, 104, 106) et configuré pour changer un sens du flux d'air à grande vitesse depuis la sortie d'air (60, 102) par rapport à la surface extérieure de véhicule ; et
un contrôleur (115) en communication avec l'unité moteur (62, 114) et la sortie de premier liquide (146, 152) pour émettre de l'air et du liquide simultanément vers la surface extérieure de véhicule dans la même direction générale ;
par lequel le contrôleur (94, 115) est en outre en communication avec l'actionneur (84, 132) pour changer le sens du flux d'air à grande vitesse et de la pulvérisation du premier liquide en réponse à l'emplacement du véhicule par rapport à l'ensemble de rinçage (102).

2. L'ensemble de la revendication 1, dans lequel l'actionneur (84, 132) peut être déplacé entre une première position et une seconde position ;
dans lequel, dans la première position, la sortie d'air (60, 112) est orientée de façon que le sens du flux d'air à grande vitesse à partir de la ventilation (52, 54, 104, 106) soit dirigé vers l'arrière ; et
dans lequel, dans la seconde position, la sortie d'air (60, 112) est configurée pour émettre le flux d'air à grande vitesse à partir de la ventilation (52, 54, 104, 106) et la pulvérisation du premier liquide vers l'avant.

3. L'ensemble de la revendication 2, dans lequel le contrôleur (94, 115) est configuré pour communiquer avec l'actionneur (84, 132) pour déplacer l'actionneur (84, 132) sur la seconde position afin de diriger le flux d'air à grande vitesse et le flux du premier liquide vers une ou plusieurs surfaces arrière extérieures de véhicule.

4. L'ensemble de la revendication 2, dans lequel l'actionneur (84, 132) est un cylindre ayant une position étirée qui correspond à la première position et une position rétractée qui correspond à la seconde position.

5. L'ensemble de la revendication 1, dans lequel le contrôleur (94, 115) est en communication avec un mécanisme de détection de véhicule pour détecter l'emplacement du véhicule par rapport à l'ensemble de rinçage (102) ; et
dans lequel le contrôleur (94, 115) est configuré pour diriger l'actionneur (84, 132) afin de changer le sens du flux d'air à grande vitesse et de la pulvérisation du premier liquide sur la base de certains emplacements de véhicules détectés prédéterminés par rapport à l'ensemble de rinçage (102)..

6. Un ensemble de rinçage de véhicule (102) pour un système de lavage de véhicule, comprenant :
au moins une unité de ventilation (52, 54, 104, 106) possédant :
une enveloppe (56, 108) avec une entrée d'air (58, 110) et une sortie d'air (60, 102) ;
une unité moteur (62, 114) placée à côté de l'entrée d'air (58, 110) et comprenant une turbine (66) pour aspirer de l'air dans l'enveloppe (56, 108) et émettre un flux d'air à grande vitesse à partir de la sortie d'air (60, 102) ;
une sortie de premier liquide (146) fixée à côté de l'enveloppe (56, 108) d'un côté de la sortie d'air (60, 102), la sortie de premier liquide (146) en communication avec une première source de liquide pour émettre une pulvérisation de premier liquide ;
une sortie de second liquide (152) fixée à l'enveloppe adjacente à un côté opposé de la sortie d'air (60, 102), la sortie de second liquide (152) en communication avec une seconde source de liquide pour émettre une pulvérisation de second liquide ; caractérisé parce que l'ensemble de rinçage de véhicule comprend en outre :
un actionneur (84, 132) en communication avec l'enveloppe (56, 108) et configuré pour changer un sens de la sortie d'air (60, 102) pour que le flux d'air à grande vitesse puisse être émis dans différentes directions ; dans lequel l'actionneur (84, 132) a une première position et une seconde position ; par lequel, dans la première position, la sortie d'air (60, 102), la sortie de premier liquide (146), et la sortie de second liquide (152) sont toutes configurées pour émettre le flux d'air à grande vitesse, la pulvérisation de premier liquide, et la pulvérisation de second liquide, respectivement, vers l'avant ;
par lequel, dans la seconde position, la sortie d'air (60, 102), la sortie de premier liquide (146), et la sortie de second liquide (152) sont toutes configurées pour émettre le flux d'air à grande vitesse, la pulvérisation de premier liquide, et la pulvérisation de second liquide, respectivement, vers l'arrière.

7. L'ensemble de la revendication 6, dans lequel la pulvérisation de premier liquide est une pulvérisation d'eau et la sortie de premier liquide (146) est disposée du côté en amont de la sortie d'air (60, 102).

8. L'ensemble de la revendication 7, dans lequel la pulvérisation de second liquide est une pulvérisation d'agent de séchage et la sortie de second liquide (152) est disposée du côté en aval de la sortie d'air (60, 102).

9. L'ensemble de la revendication 6, dans lequel l'actionneur (84, 132) est un cylindre ayant une position étirée qui correspond à la première position et une position rétractée qui correspond à la seconde position.

10. L'ensemble de la revendication 6, dans lequel l'actionneur (84, 132) est en communication avec un contrôleur (94, 115) pour diriger son déplacement en première position et en seconde position sur la base de certains emplacements prédéterminés d'un véhicule par rapport au châssis (70, 120).

11. L'ensemble de la revendication 10, comprenant en outre :
un mécanisme de détection de véhicule pour déterminer un emplacement d'un véhicule par rapport à l'ensemble de rinçage (102) et communiquer l'emplacement détecté au contrôleur (94, 115).

12. L'ensemble de la revendication 6, dans lequel la au moins une unité de ventilation (52, 54, 104, 106) est fixée à un châssis (70, 120) pour que l'actionneur (84, 132) puisse faire pivoter la au moins une unité de ventilation (52, 54, 104, 106) afin de changer le sens du flux d'air à grande vitesse.

13. Un élément de rinçage de véhicule pour un extérieur de véhicule, comprenant :
un châssis (70, 120) placé à côté d'une zone de traitement de véhicule ; un ensemble de ventilation (52, 54, 104, 106) fixé au châssis (70, 120) l'ensemble de ventilation (52, 54, 104, 106) comprenant une paire d'unités de turbine motorisées (66) chacune ayant une enveloppe (56, 108) avec une entrée d'air (58, 110), une sortie d'air (60, 112) et une unité moteur (62, 114) placée à côté de l'entrée d'air (58, 110) pour aspirer de l'air dans l'enveloppe (56) et émettre un flux d'air à grande vitesse à partir de la sortie d'air (60, 112);
une pluralité de sorties de premier liquide (146, 152) fixées à l'ensemble de ventilation (52, 54, 104, 106) pour émettre une pulvérisation de premier liquide ; caractérisé parce que l'ensemble de ventilation (52, 54, 104, 106) est fixé de façon pivotante au châssis (70, 120) par un support (78, 128),
dans lequel l'élément de rinçage de véhicule comprend en outre
un actionneur (84, 132) en communication avec l'ensemble de ventilation (52, 54, 104, 106) pour faire pivoter l'ensemble de ventilation (52, 54, 104, 106) entre une pluralité de positions différentes afin que le flux d'air à grande vitesse et la pulvérisation de premier liquide puissent être émis dans de multiples directions différentes par rapport à un extérieur du véhicule ;
par lequel l'ensemble de ventilation (52, 54, 104, 106) est configuré pour émettre le flux d'air à grande vitesse et la pulvérisation de premier liquide sur l'extérieur du véhicule simultanément afin d'effectuer le rinçage de l'extérieur du véhicule.

14. L'élément de la revendication 13, comprenant en outre :
un contrôleur (94, 115) en communication avec l'actionneur (84, 132) pour ordonner à l'actionneur de faire pivoter l'ensemble de ventilation (52, 54, 104, 106) sur la pluralité de positions différentes sur la base d'un emplacement détecté d'un véhicule.

15. L'élément de la revendication 14, dans lequel, dans l'une de la pluralité de positions, les sorties d'air (60, 112) sont configurées pour émettre le flux d'air à grande vitesse vers l'arrière.
